# EUROPEAN PATENT APPLICATION

(11) **EP 1 880 932 A1**
(43) Date of publication of application: **23.01.2008**
(21) Application number: 07013806.0
(22) Date of filing: 13.07.2007
(51) Int. Cl.: B62D 55/28, B62D 55/20, B62D 55/21

(54) **Rubberized segmented track**

(30) Priority: 21.07.2006 US 490677
(71) Applicant: THE GOODYEAR TIRE & RUBBER COMPANY, Akron, OH 44316-0001 (US)
(72) Inventor: Kremer, John David, Cellina, Ohio 45822 (US); Balster, Andrew Joseph, St. Henry, Ohio 45883 (US); Fullenkamp, Daniel Lee, Coldwater, Ohio 45828 (US)
(74) Representative: Dreiss, Fuhlendorf, Steimle & Becker

(57) **Abstract**

A track (18) is formed from a plurality of circumferentially adjacent shoe tracks (22). A pair of laterally adjacent half tracks (24) forms each shoe track (22). Each half track (24) comprises a block (26) with an integrally formed engagement horn (28) preferably extending at a right angle from the block (26). The engagement horn (28) in each block (26) is located at a position not more than 20% of the block length (LB) from an interior end of each block (26).

## Description

### Field of the Invention

The present invention is directed to a rubberized segmented track. More specifically, the present invention is directed to a track having an improved construction for mounting on track vehicles having a high drawbar load.

### Background of the Invention

Track vehicles have been in use for many years, with an increase in recent years in the application of track vehicles for use in agricultural and industrial applications. Track agriculture/industrial vehicles have many concerns about the type of tracks due to concerns about ability to travel on conventional roads, soil compaction, and crop and field protection. Rubber tracks conventionally used have been endless, continuous elastomeric tracks with drive lugs located on the inner side of the track and traction lugs on the out side of the track. Such tracks are reinforced with at least one continuous ply of reinforcing cords extending, the ply extending between the opposing lateral edges of the track. The drive lug may be additionally reinforced. Some continuous tracks, for increased durability, have been provided with different metallic means.

However, as the uses for tracked agricultural vehicles in agricultural and industrial applications increase, more demand is placed on the vehicle, including the need for increased power to pull various implements with the vehicle. This increased drawbar load requirement impacts on the drive system of the vehicle, and hence, on the track. Conventional continuous reinforced elastomeric tracks have attempted to provide the necessary transmission of power for the vehicle, however, vehicle horsepower requirements continuously increase.

### Summary of the Invention

The present invention is directed to a vehicle track according to claim 1 having increased strength and durability with a minimum footprint suitable for use on track vehicles having high drawbar requirements. More specifically, the present invention is directed to a track for agriculture and industrial vehicles having high drawbar requirements.

Disclosed herein is a track for use on a track vehicle. The track is formed from a plurality of circumferentially adjacent shoe tracks. A pair of laterally adjacent half tracks forms each shoe track. Each half track comprises a block with an integrally formed engagement horn preferably extending at a right angle from the block. The engagement horn in each block is located at a position not more than 20% of the block length from an interior end of each block. Each shoe track has at least one engagement opening therein for engagement with a drive sprocket of a drive wheel and track assembly.

In another aspect of the invention, each shoe track has two pins extending along the length of each shoe track. In combination with the pins, pin connectors extending between adjacent pins of adjacent shoe tracks connect the circumferentially adjacent shoe tracks.

In another aspect of the invention, the shoe track has one engagement opening, the engagement opening being centrally located in the shoe track. Alternatively, the shoe track has a pair of spaced engagement openings, each opening formed in one of the laterally adjacent shoe blocks.

In another aspect of the invention, the engagement opening of the shoe track is located adjacent to at least one of the engagement horns.

In another aspect of the invention, each shoe track has a pair of grouser pads mounted on the outerside, or ground contact side, of the track.

In another aspect of the invention, each shoe track has a pair of elastomeric backer pads mounted on the innerside of the track.

### Brief Description of the Drawings

The invention will be described by way of example and with reference to the accompanying drawings in which:
FIG. 1 illustrates a drive wheel and track assembly for a track vehicle;
FIG. 2 is a view of the inner surface of a single shoe for a track assembly;
FIG. 3 illustrates a track shoe engagement with a drive sprocket;
FIG. 4 is a view of the rubberized ground surface of a single shoe for a track assembly;
FIGS. 5-8 are alternative embodiments of a track shoe; and
FIG. 9 is another view of the track shoe of FIG. 8.

### Detailed Description of the Invention

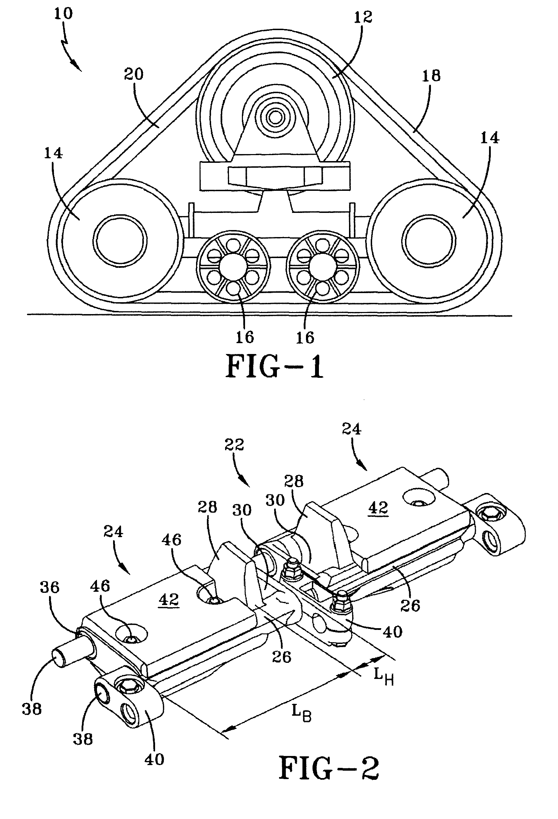

FIG. 1 is a side view of a drive wheel and track assembly 10 for a track vehicle. For ease in illustration and understanding of the present invention, only the basic elements necessary for an understanding of the present invention is illustrated. The illustrated assembly 10 has a drive wheel 12, a pair of idler wheels 14, a pair of roller wheels 16, and a track 18 which travels about the wheels 12, 14, 16 and provides ground contact and traction for the track vehicle. All of the wheels 12, 14, 16 of the assembly have a smooth outer circumferential surface. The drive wheel 12 is typically constructed to have either a center drive engagement system to actively engage the underside 20 of the track 18. In prior art drive wheel and track assemblies 10, the track 18 is a continuous rubber track with drive lugs located on the underside 20 of the track 18 wherein the drive lugs interact with the drive engagement system of the drive wheel 12. However, for some tracked vehicles having a high drawbar load (the ability of the vehicle to pull an implement), the conventional continuous rubber track may not provide the vehicle with the track design desired by the vehicle manufacture.

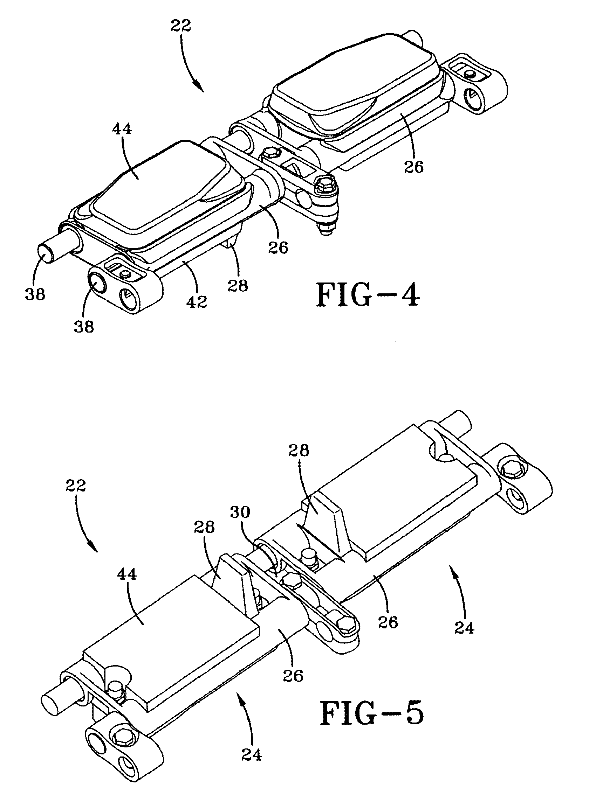

The present invention is directed to a track assembly designed for vehicles having a high drawbar load. FIGS. 2 and 4 are illustrative of a single shoe 22 for a track assembly for a track vehicle, such as an agricultural or industrial vehicle. While only a single shoe 22 is illustrated, those skilled in the art will readily understand that multiple shoes 22 are connected together in order to form a continuous track. FIG. 2 illustrates the underside of the shoe track 22; this being the side directly adjacent to the wheels 12, 14, 16 of the vehicle drive assembly. FIG. 4 illustrates the ground contacting of the shoe track 22.

Each shoe track 22 has a mirror symmetrical structure of two half tracks 24 joined together. Each half track 24 has a metallic block 26 with an integrally formed engagement horn 28 extending at a right angle from the block 26, see FIG. 2. The engagement horn 28 is formed from the same material as the block 26 and at the same time as the block 26, forming part of the block 26. In each half track 24, the horn 28 is located at a position L_{H} not more than 20%, alternately not more than 15%, of the half track length L_{B} from the interior end of each half track 24. The laterally adjacent half tracks 24 in the shoe track 22 create a pair of engagement horns 28. Preferably, each shoe track 22 is provided with at least one opening 30 to create engagement with a drive sprocket mounted on the drive wheel of the drive assembly. For the shoe track 22 of FIG. 2, one engagement opening 30 is located directly adjacent each engagement horn 28 in each half track 24, symmetrically locating a pair of openings 30 in the center of the shoe track 22.

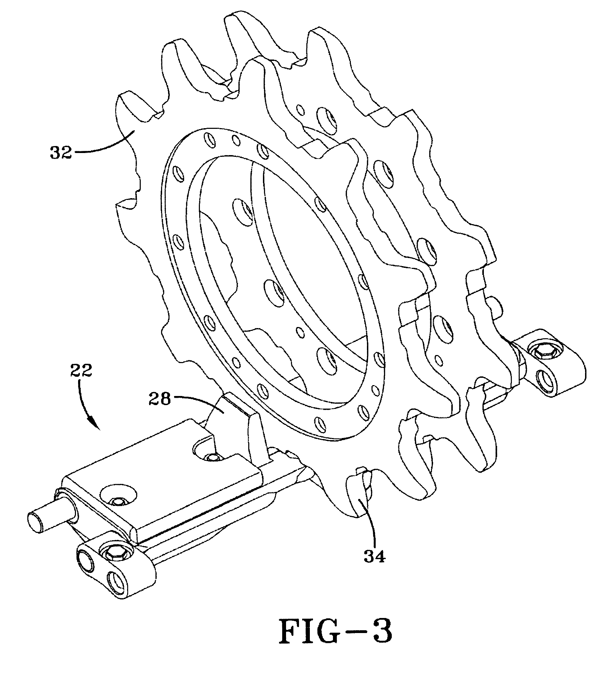

FIG. 3 shows the interaction between the shoe track 22 and a pair of drive sprockets 32 of a drive wheel. The teeth 34 of the drive sprockets 32 interact with the engagement openings 30 of the shoe track 22 and the engagement horns 28 of the shoe track 22 aid in proper placement and engagement between the drive sprockets 32 and the shoe track 22.

On opposing sides of the half tracks 24, along the length of the tracks 24, are openings 36 for pins 38. The pins 38 extend beyond the combined length of the two adjacent half tracks 24. The pins 38 connect the two laterally adjacent half tracks 24 in the shoe track 22. The pins 38 are preferably provided with elastomeric bushings to assist in reducing vibrations in the track. Pin connectors 40 mounted on the ends of the pins 38 and at a midpoint between the laterally adjacent half tracks 24 connect each shoe track 22 to a circumferentially adjacent shoe track 22 in the continuous track.

Mounted on the underside of each half track 24 is a backer pad 42. The backer pad 42 covers the majority of the theoretical surface area of the underside of each half track 24. When mounted on a drive assembly 10, the backer pad 42 contacts the outer circumference of the drive wheel 12, roller wheels 14, and idler wheels 16. The size of the backer pad 42 may be varied depending on the width of the outer circumference of the wheels 12, 14, 16. The backer pad 42 preferably is formed from an elastomeric material.

On the ground contacting side of the shoe track 22, grouser pads 44 are mounted on each half track 24, see FIG. 4. The grouser pad 44 may be provided with a lug design to assist in traction characteristics for the track. The lug design may mimic lug designs provided on conventional all elastomeric tracks or agricultural, off the road tires. The grouser pad 44 is formed from elastomeric material. As the grouser pads 44 create the ground contacting surface for the track, the pads 44 will likely wear down during the life of the track and the vehicle upon which the track is mounted. Also, the pads 44 may be subjected to chipping, tearing, and other forms of deterioration due to the different ground surfaces upon which the track travels. Thus, the grouser pads 44 are mounted to the blocks 26 by means of grouser bolts 46, see FIG. 2, to permit replacement of the grouser pads 44 as needed during the life of the track. Each grouser pad 44 is secured by a pair of grouser bolts 46 to strengthen the grouser pad 44 and improve the durability of the pad 44 when subjected to increased loads on the track.

The shoe tracks 22 of FIGS. 5-8 illustrate alternative constructions of the shoe track 22. The consistent feature of the features is the presence of a pair of symmetrically spaced engagement horns 28 integral and extending from the blocks 26 of the shoe track 22, dual pins 38 for connecting the laterally adjacent shoe tracks 24, and separate backer pads 42 on each side of the shoe track 22.

In the shoe track of FIG. 5, the shoe track 22 has an opening 30 located between the half tracks 24 of the shoe 22, and centrally located between the engagement horns 28 that may be used in combination with a drive sprocket 32. Alternatively, or in combination with a central drive sprocket 32 in a drive assembly, a drive system may employ drive sprockets 32 that engage the openings 30 created between the pin connectors 40 at the lateral ends of the shoe track 22. For any of the embodiments disclosed herein, the shoe tracks 22 may be used in combination with a drive system with drive sprockets 32 located at the lateral ends of the drive system, wherein the teeth 34 of the drive sprocket 32 engage the opening created between the pin connectors 40 at the lateral ends of the shoe track 22.

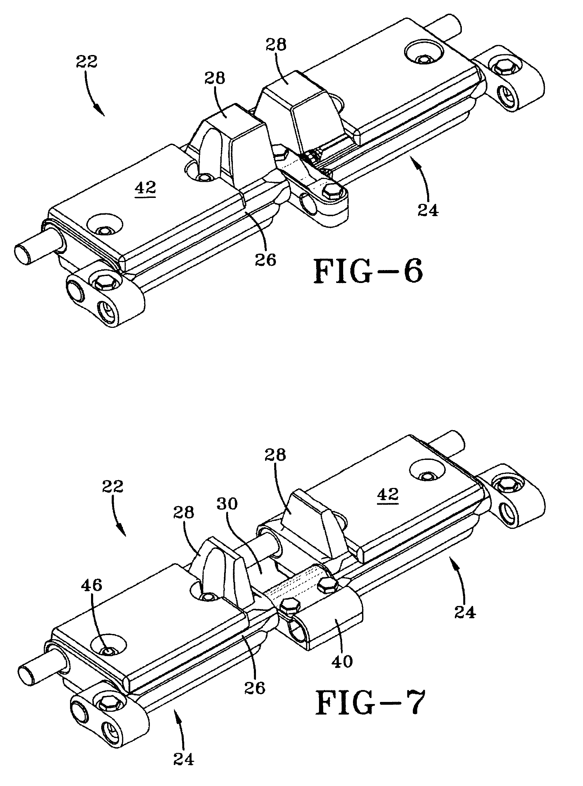

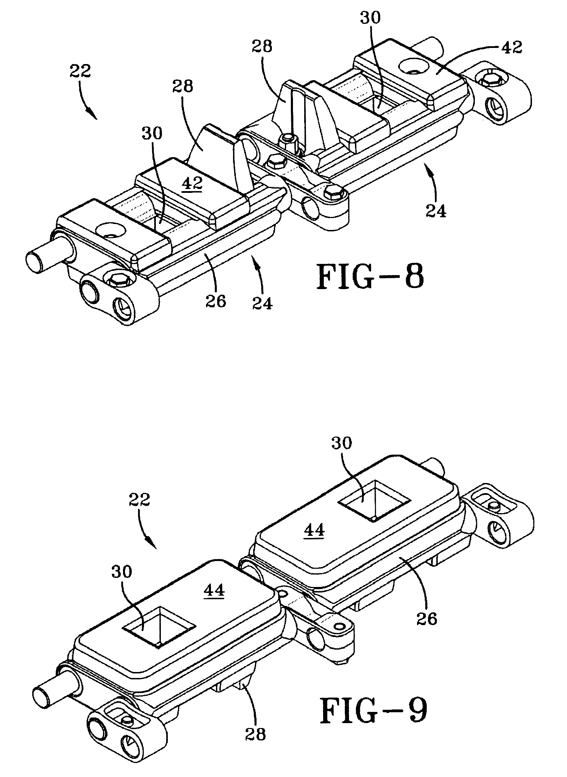

In the shoe track of FIG. 6, the engagement horns 28 have a wider profile than the horns 28 of the prior shoe track embodiments. The wider horns act as drive lugs or a reverse sprocket system for the drive wheel. In the shoe track of FIG. 7, the opening 30 between the half tracks 24 is wider than the opening 30 of FIGS. 5 and 6; this increased width opening being created by the use of a wide pin connector 40 between the half tracks 24.

In the shoe track of FIG. 8, for each half track 24, an engagement opening 30 is located laterally outwards of the engagement horn 28. To permit the teeth 34 of a drive sprocket 32 to fully engage the shoe track, the openings 30 may extend through the grouser pads 44, see FIG. 9.

## Claims

1. A track for use on a track vehicle, the track (18) comprising a plurality of circumferentially adjacent connected shoe tracks (22), each shoe track (22) having at least one engagement opening (30) therein, wherein each shoe track (22) comprises a pair of laterally adjacent shoe blocks (26), each block (26) having an integrally formed engagement horn (28) extending from the block (26), and wherein the engagement horn (28) in each block (26) is located at a position not more than 20% of the block length (LB) from an interior end of each block (26).

2. The track of claim 1 wherein each shoe track (22) has two pins (38) extending along the length of each shoe track (22).

3. The track of claim 1 or 2 wherein the engagement opening (30) is centrally located in the shoe track (22).

4. The track of claim 1 or 2 wherein the shoe track (22) has a pair of spaced engagement openings (30), each opening being formed in one of the laterally adjacent shoe blocks (26).

5. The track of at least one of the previous claims wherein at least one engagement opening (30) is adjacent to at least one of the engagement horns (28).

6. The track of at least one of the previous claims wherein each shoe track (22) further comprises at least one grouser pad (44) mounted on the outerside of the track (18).

7. The track of at least one of the previous claims wherein each shoe track (22) further comprises at least one backer pads (42) mounted on the innerside of the track (18).

8. The track of at least one of the previous claims wherein the shoe blocks (26) are formed from a metallic material.

9. The track of at least one of the previous claims wherein the engagement horn (28) extends at a right angle from the block (26).
